# EUROPEAN PATENT SPECIFICATION

(11) **EP 1 669 309 B1**
(45) Date of publication and mention of the grant of the patent: **15.10.2008**
(21) Application number: 05026552.9
(22) Date of filing: 06.12.2005
(51) Int. Cl.: B65G 61/00

(54) **Method for loading groups of products on pallets**
Verfahren zum Beladen von Paletten mit Gruppen von Produkten
Procédé pour charger des palettes avec des groupes de produits

(30) Priority: 10.12.2004 IT BO20040760
(43) Date of publication of application: 14.06.2006
(73) Proprietor: Tissue Machinery Company S.p.A., 40057 Granarolo Emilia (Bologna) (IT)
(72) Inventor: Dall'Omo, Davide, 40132 Bologna (IT); Pattuelli, Matteo, 48020 Bagnacavallo (Ravenna) (IT)
(74) Representative: Lanzoni, Luciano

(56) References cited:
- EP-A- 0 146 643
- US-B1- 6 290 448

## Description

The present invention relates to a method for loading groups of product on pallets, according to the preamble of claim 1.

Hereinafter, reference is made to stations in which overwrapping bags are fed, containing a plurality of packs which will be suitably stacked on pallets.

At present, apparatuses for the production of the above-mentioned packs of products have reached a high level of productivity per unit of time and can supply a plurality of packs already bagged in sheets of overwrapping film for suitable stacking on pallets which will be sent to warehouses (belonging to the manufacturer or others) which will subsequently organise shipments of the pallets.

In order to be able to palletise the bags correctly there are known stations for bag outfeed from the apparatus which, in a known solution, may have two or more sub-stations for handling bags until they are stacked on the pallets.

In a construction example, these sub-stations are at the end of the packaging apparatuses and comprise two operating islands, one for outfeed and bag preparation and one for receiving them on the pallets, separated by a bag pick up, handling and set down station.

More precisely, these islands may briefly be structured as follows:
- a first sub-station or island for receiving bags at outfeed, having a conveyor surface in the same plane as the packaging apparatus outfeed surface to bring the bags towards the free end of this first sub-station; here the bags are positioned by a logic unit (for example, a robotic unit with Cartesian axes) which performs positioning along two axes perpendicular to one another and parallel with the conveyor surface;
- a second sub-station for handling bags consisting of a second logic unit (another robotic unit) having mobile grippers for picking up the bags prepared and moving the bags near to a pallet located on a
- third sub-station consisting of a horizontal surface divided into a first operating zone for supporting the pallet to be loaded, vertically mobile if necessary, and at least a second stopping or magazine zone for the pallets standing by.

Therefore, the palletising steps basically comprise: preparation of the bags in the pick up zone; bag pick up by the arm with gripper; rotation with bag release and set down on the pallet standing by in the operating zone.

In one solution, during loading, the pallet is at a predetermined height and can gradually be lowered to predetermined heights, depending on the height of the stack of bags already formed, so as to maintain a loading surface acceptable for movement of the arm with grippers. Alternatively, the robotised unit may arrange the packs at different heights to achieve the desired palletising.

Whatever the case, upon completion of the programmed loading, decided by the operator and saved using the processors which control the various units, the pallet is expelled from the operating zone.

Once the completed pallet has been expelled, the new pallet to be loaded is subsequently carried to the operating zone by special conveyor means, then a new stacking cycle begins with the above-mentioned methods.

It is known from EP 0146643 a device for palletising stacked material, comprising a magazine arranged adjacent to a lifting platform which is seated below a distribution means and supports the pallets to be filled. After the pallet has been filled, the lifting platform is moved downwards and the pallet is transported away laterally from the lifting platform. In this period, a new pallet is taken from the magazine by means of a gripping and retaining device and held in the position under the distributor until it is received by the lifting platform. After the new pallet has been held in such a position, the distribution means may already lay the first layer on the new pallet.

Working this way, it was noticed that the transient time for complete expulsion of the finished pallet and for positioning the next pallet in the operating zone is relatively high compared with the number of bags fed out by the packaging apparatus in the same time.

This high time is due both to the need to safely expel a pallet that is full and, therefore, heavy while reducing the risk of the products which have still not been stabilised falling, and the need to use kinematic systems with fixed feed rate and speed to return the surface to the initial height and to feed in a new pallet.

In other words, the step of standing by for the new pallet may cause a flood of bags on the outfeed surface of the first island, due to the higher speed of the packaging apparatus: in such cases, as a result, the productivity of the apparatus must be reduced, if not stopped, thus reducing its production capacities.

The aim of the present invention is therefore to overcome these disadvantages by providing a method for loading groups of products in bags on pallets with which palletising can be optimised, using the same construction architecture for the outfeed stations and keeping the packaging apparatuses at their maximum production capacities.

Accordingly, the present invention achieves this aim with a method for loading groups of product on pallets according to the appended claim 1.

The technical characteristics of the invention, with reference to the above aims, are clearly described in the claims herein and its advantages are more apparent from the detailed description which follows, with reference to the accompanying drawings which illustrate a preferred embodiment of the invention provided merely by way of example without restricting the scope of the inventive concept as it is described by the appended claims, and in which:
- Figure 1 is a schematic top plan view with some parts cut away to better illustrate others of a system for packaging and stacking paper products grouped together in palletisable units in which the method for loading units on pallets according to the present invention is applied;
- Figures 2 to 4 are all schematic top plan views of a loading zone of the system illustrated in Figure 1, of corresponding steps of the loading method according to the present invention.

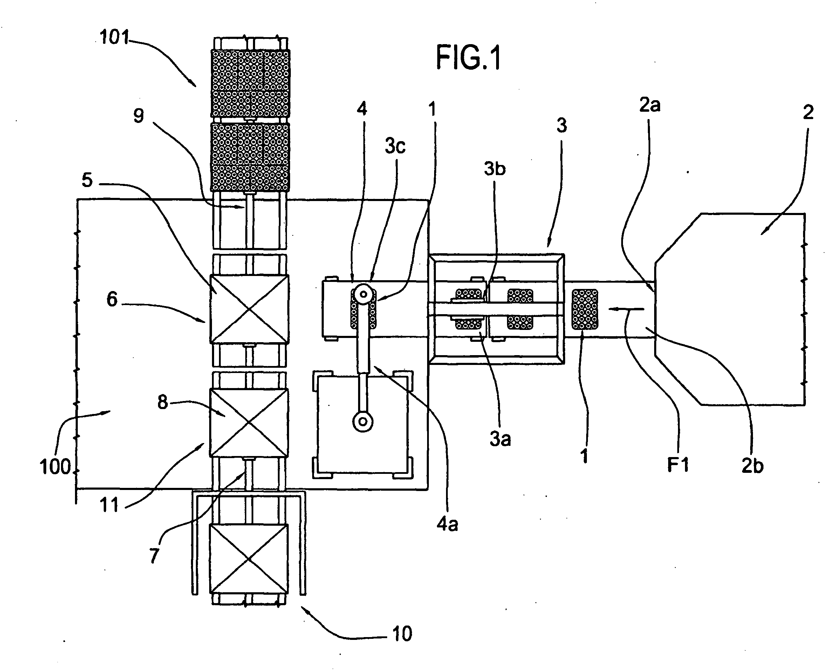

With reference to the accompanying drawings, and in particular with reference to Figure 1, the method disclosed is used to optimise the loading of groups of products on pallets.

In particular, these groups of product, by way of example only, consist of palletisable units such as bags 1, containing a plurality of packs of paper products for bathroom and/or household use, (for example rolls of toilet paper, rolls of kitchen paper, handkerchiefs, etc.), but it can also be used for any other palletisable product without thereby limiting the scope of the inventive concept.

Similarly, this method may be implemented on a system as illustrated in the accompanying drawings and which is described by way of example only, without limiting the scope of the inventive concept of this solution as described in the appended claims.

This system may comprise:
- an apparatus 2, of the known type, for packaging products and forming the above-mentioned bags 1;
- a bag 1 outfeed zone 2a having a first mobile horizontal belt 2b connected to;
- a station 3 for receiving the bags 1 comprising a second belt 3a and, if necessary, a first robotic unit 3b (of the known type) for positioning the bags 1 according to Cartesian axes parallel with the second belt 3a;
- a bag 1 pick up zone 3c formed by the free end of the second belt 3a;
- means 4 for picking up and moving a succession of bags 1 onto a first pallet 5; these means may consist of a second robotic unit 4a (also of the known type) having grippers for picking up and releasing the bags 1.

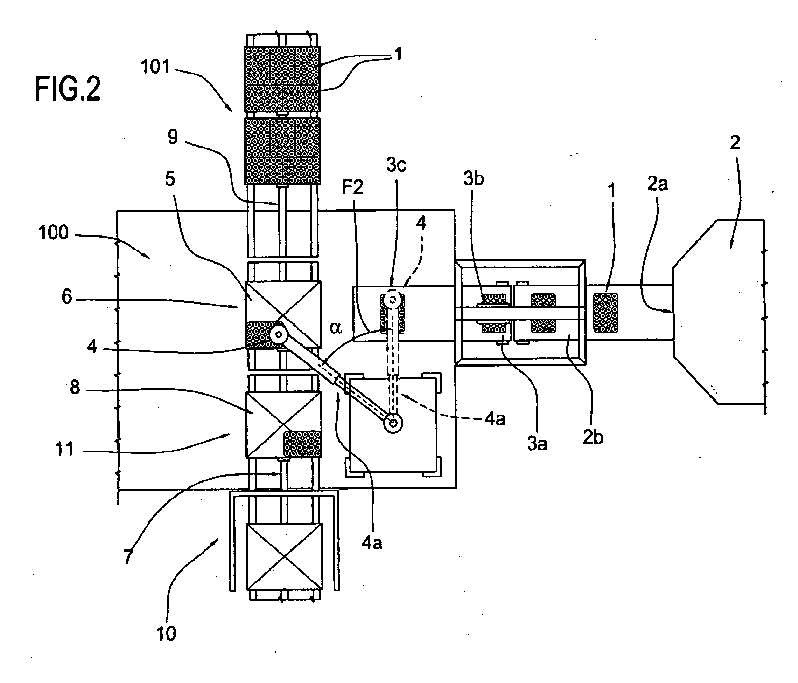

The first pallet 5 is located on an operating island 100 having a bag loading zone 6 (where the first pallet 5 is positioned in Figures 1 and 2), inserted between a magazine 10 or stand by zone 11 for a second pallet 8 and a zone 101 for expulsion of completed pallets.

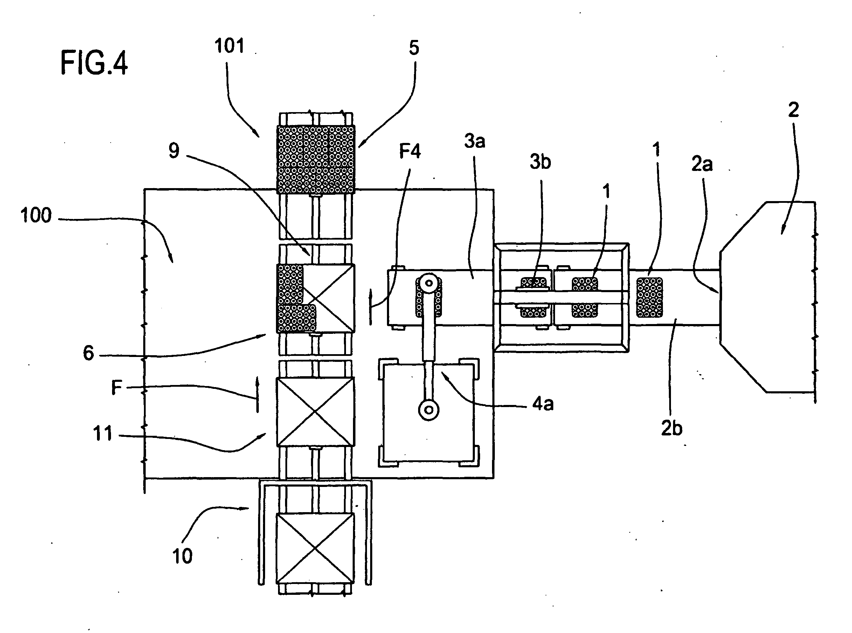

In the embodiment illustrated, by way of example only, there is both the stand by zone 11, preferably downstream of the pallet magazine 10, with relation to the direction of pallet feed in the operating island 100 (see arrow F in Figure 4), designed to feed the pallets gradually as they are completed by the load of bags 1.

The various handling movements for pallet 5 and 8 feed in the stand by zone 10, loading zone 6 and expulsion zone 101 are provided by first and second handling means 7 and 9 comprising, for example, pallet feed chains.

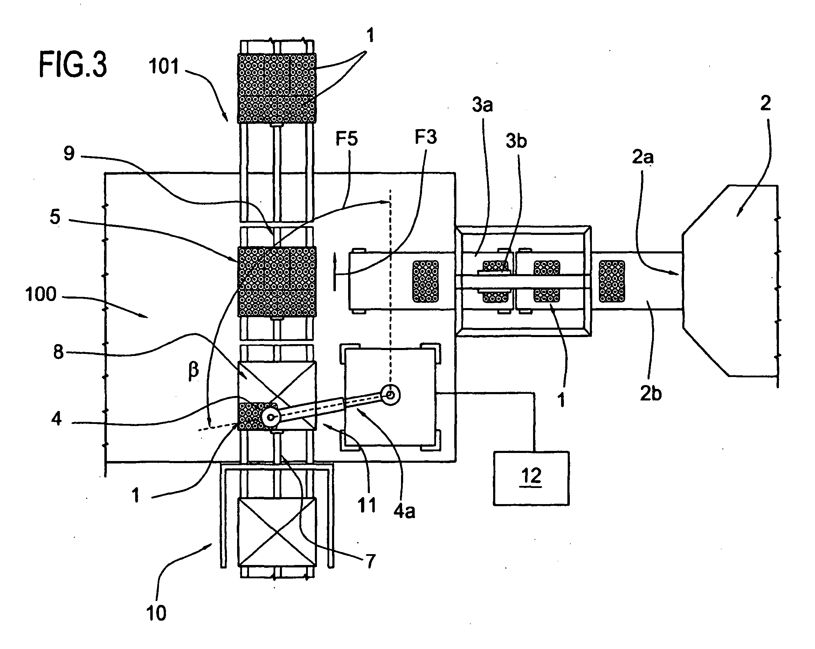

In a system of this type, the loading method basically comprises the following steps:
- outfeed from the packaging apparatus 1 of a succession of bags 1 of packs of products into the receiving station 3 (see arrow F1 in Figure 1);
- pick up and movement (see arrow F2 in Figure 2), by the means 4, of a succession of bags 1 onto the first pallet 5 located in the loading zone 6, to form two or more ordered layers one on top of another, until a complete stack of the bags 1 is formed on the first pallet 5;
- expulsion of the completed first pallet 5 from the loading zone 6 by first handling means 7 (see arrow F3 in Figure 3);
- positioning of a second pallet 8 to be loaded, by second handling means 9, from the magazine 10 or from the stand by zone 11 to the loading zone 6, upon completion of the step of expelling the completed first pallet 5 (see arrow F4 in Figure 4) .

As is clearly shown in Figure 3, between the step of expelling the completed first pallet 5 and the step of positioning the second pallet 8 in the loading zone 6, there is a step of starting to load a predetermined number of the bags 1 on the second pallet 8 (see arrow F5 in Figure 3).

In practice, the stand by time, which would be idle in terms of picking up and moving the bags 1, is instead made useful by starting to load the second pallet 8 when the latter is still in the magazine 10 or in the stand by zone 11.

As illustrated in Figure 3, the step of starting to load the bags 1 is performed in the magazine 10 or the stand by zone 11 with the second pallet 8 stationary.

In a hypothetical alternative embodiment, the step of starting to load the bags 1 may begin in the magazine 10 or, in the stand by zone 11 with the second pallet 8 stationary and may be continued with the second pallet 8 moving towards the loading zone 6.

According to the system structure illustrated, the step of starting to load the bags 1 is preferably performed on the second pallet 8 while the latter is stationary in the stand by zone 11.

The step of starting to load the bags 1 on the second pallet 8 is controlled by a microprocessor unit 12 (illustrated with a block in Figure 3), acting on the second robotic pick up and movement unit 4a, to define the predetermined number of bags 1 to be positioned on the second pallet 8 according to the stand by times for expulsion of the completed first pallet 5.

As can be seen in Figures 2 to 4, the pick up and movement step occurs by rotating each bag 1, using the second robotic unit 4a, through an angle α calculated using as a starting point the receiving station 3 and as a finishing point the loading zone 6.

Similarly, the step of starting to load the second pallet 8 occurs by rotating each bag 1, again using the second robotic unit 4a, through a second angle β different to the first angle α; the angle β being calculated using as a starting point again the receiving station 3 and as a finishing point the stand by zone 11.

In the geometry of the system illustrated, the second angle β covered by the second robotic unit 4a is greater than the first angle α.

Therefore, such a method achieves the preset aims thanks to a intermediate step which, taking advantage of the functions offered by the robotic pick up and movement unit, can begin loading bags even when the second pallet is still in the stand by zone.

This allows the packaging apparatus, and all the operating stations downstream of the apparatus, to be kept operating with maximum productivity.

Down times are thus drastically reduced, since the only time during which the second robotic unit does not load is during the very short time needed to transfer the second, pre-loaded pallet from the stand by zone to the loading zone, which, in itself does not have a significant impact in terms of productivity.

This added step does not have a negative effect on system costs and dimensions, but it does increase system overall productivity.

In a more sophisticated version, the down times would be eliminated completely, with the second robotic unit programmed to load as it follows the moving second pallet.

The invention described has evident industrial applications and can be modified and adapted without thereby departing from the scope of the inventive concept as described in the appended claims.

## Claims

1. A method for loading groups of products on pallets, the groups (1) of products consisting of a plurality of packs, grouped together to form a palletisable unit (1), of paper products for bathroom and/or household use; the method comprising at least the following steps:
- outfeed from a packaging apparatus (2) of a succession of units (1) of said packs of products into a receiving station (3);
- pick up and movement, by suitable means (4), of a succession of said units (1) onto a first pallet (5) located in a loading zone (6), to form two or more ordered layers one on top of another, until a complete stack of the units (1) is formed on the first pallet (5);
- expulsion of the completed first pallet (5) from the loading zone (6) by first handling means (7);
- positioning of a second pallet (8) to be loaded, by second handling means (9), from a magazine (10) or from a stand by zone (11) to the loading zone (6), upon completion of the step of expelling the completed first pallet (5), whereby between the expulsion step and the step of positioning the second pallet (8) in the loading zone (6) there being a step of starting to load a predetermined number of the units (1) on the second pallet (8);
**characterised in that** the step of starting to load the units (1) on the second pallet (8) is controlled by a microprocessor unit (12), acting on the pick up and movement means (4), and being designed to define the number of units (1) to be positioned on the second pallet (8) according to the stand by times for expulsion of the completed first pallet (5).

2. The method according to claim 1, **characterised in that** the step of starting to load the units (1) is performed in the magazine (10) or in the stand by zone (11) with the second pallet (8) stationary.

3. The method according to claim 1, **characterised in that** the step of starting to load the units (1) begins in the magazine (10) or in the stand by zone (11) with the second pallet (8) stationary and continues with the second pallet (8) moving towards the loading zone (6).

4. The method according to claim 1, where the second pallet (8) stops in an intermediate stand by zone (11) between the magazine (10) and the loading zone (6), **characterised in that** the step of starting to load the units (1) is performed on the second pallet (8) while it is stationary in the stand by zone (11).

5. The method according to claim 1, **characterised in that** the pick up and movement step occurs by rotating each unit fusing the means through an angle (α) with as a starting point the receiving station (3) and as a finishing point the loading zones (6).

6. The method according to claims 1 and 5, **characterised in that** the step of starting to load the second pallet (8) occurs by rotating each unit (1), using the means (4), through a second angle (β) different to the first angle (α), with as a starting point the receiving station (3) and as a finishing point the stand by zone (11) or the magazine (10).

7. The method according to claim 6, **characterised in that** the second angle (β) covered by the means (4) is greater than the first angle (α).

## Patentansprüche

1. Verfahren zum Laden von Produktgruppen auf Paletten, worin die Produktgruppen (1) aus mehreren Packungen von Papierprodukten zur Verwendung im Bad und/oder Haushalt gebildet werden, die zusammen zu einem palettierbaren Gebinde (1) gruppiert sind; wobei das Verfahren zumindest die folgenden Schritte beinhaltet:
- Ausgeben einer Aufeinanderfolge von Gebinden (1) der genannten Produktpackungen aus einer Verpackungsvorrichtung (2) in eine Aufnahmestation (3);
- Aufnehmen und Verlagern, durch geeignete Einrichtungen (4), einer Aufeinanderfolge genannter Gebinde (1) auf eine erste Palette (5), die in einem Ladebereich (6) angeordnet ist, um zwei oder mehrere geordnete, übereinander liegende Lagen zu bilden, bis ein vollständiger Stapel von Gebinden (1) auf der ersten Palette (5) gebildet ist;
- Entfernen der vollständig beladenen ersten Palette (5) aus dem Ladebereich (6) durch erste Handhabungseinrichtungen (7);
- Positionieren einer zu beladenden zweiten Palette (8), durch zweite Handhabungseinrichtungen (9), aus einem Magazin (10) oder aus einem Wartebereich (11) in den Ladebereich (6), nachdem der Schritt des Entfernens der vollständig beladenen ersten Palette (5) abgeschlossen ist,
wobei zwischen dem Schritt des Entfernens und dem Schritt des Positionierens der zweiten Palette (8) in dem Ladebereich (6) ein Schritt des Beginnens mit dem Laden einer vorbestimmten Anzahl von Gebinden (1) auf die zweite Palette (8) vorgesehen ist;
wobei das genannte Verfahren **dadurch gekennzeichnet ist, dass** der Schritt des Beginnens mit dem Laden der Gebinde (1) auf die zweite Palette (8) von einer Mikroprozessoreinheit (12) gesteuert wird, die auf die Aufnahme- und Verlagerungseinrichtungen (4) wirkt und dafür ausgelegt ist, die Anzahl der Gebinde (1), die auf der zweiten Palette (8) abgelegt werden sollen, in Abhängigkeit von den Wartezeiten für das Entfernen der vollständig beladenen ersten Palette (5) zu bestimmen.

2. Verfahren nach Anspruch 1, **dadurch gekennzeichnet, dass** der Schritt des Beginnens mit dem Laden der Gebinde (1) in dem Magazin (10) oder in dem Wartebereich (11) ausgeführt wird, während die zweite Palette (8) stillsteht.

3. Verfahren nach Anspruch 1, **dadurch gekennzeichnet, dass** der Schritt des Beginnens mit dem Laden der Gebinde (1) in dem Magazin (10) oder in dem Wartebereich (11) beginnt, während die zweite Palette (8) stillsteht, und fortgesetzt wird, während sich die zweite Palette (8) zum Ladebereich hin bewegt (6).

4. Verfahren nach Anspruch 1, worin die zweite Palette (8) in einem zwischenliegenden Wartebereich (11) zwischen dem Magazin (10) und dem Ladebereich (6) anhält, **dadurch gekennzeichnet, dass** der Schritt des Beginnens mit dem Laden der Gebinde (1) auf die zweite Palette (8) ausgeführt wird, während diese in dem Wartebereich (11) stillsteht.

5. Verfahren nach Anspruch 1, **dadurch gekennzeichnet, dass** der Aufnahme- und Verlagerungsschritt ausgeführt wird, indem jedes Gebinde (1) unter Verwendung der Einrichtungen (4) um einen Winkel (α) gedreht wird, wobei die Aufnahmestation (3) den Anfangspunkt der Drehung und der Ladebereich (6) den Endpunkt der Drehung darstellt.

6. Verfahren nach den Ansprüchen 1 und 5, **dadurch gekennzeichnet, dass** der Schritt des Beginnens mit dem Laden der zweiten Palette (8) ausgeführt wird, indem jedes Gebinde (1) unter Verwendung der Einrichtungen (4) um einen zweiten Winkel (β) gedreht wird, der von dem ersten Winkel (α) verschieden ist, wobei die Aufnahmestation (3) den Anfangspunkt der Drehung und der Wartebereich (11) oder das Magazin (10) den Endpunkt der Drehung darstellt.

7. Verfahren nach Anspruch 6, **dadurch gekennzeichnet, dass** der zweite Winkel (β), der von den Einrichtungen (4) zurückgelegt wird, größer ist als der erste Winkel (α).

## Revendications

1. Un procédé pour charger des groupes de produits sur des palettes, les groupes (1) de produits étant constitués d'une pluralité de paquets, regroupés ensemble pour constituer une unité (1) palettisable, de produits en papier à usage hygiénique et/ou domestique ; le procédé comprenant au moins les phases suivantes :
- faire sortir d'un dispositif d'emballage (2) une succession d'unités (1) desdits paquets de produits dans une station de réception (3) ;
- prélever et transférer, par l'intermédiaire de moyens (4) appropriés, une succession desdites unités (1) sur une première palette (5) située dans une zone de chargement (6) afin de former deux, ou plus, couches ordonnées les unes sur les autres, jusqu'à former une pile complète d'unités (1) sur la première palette (5) ;
- évacuer la première palette (5) achevée de la zone de chargement (6) par l'intermédiaire de premiers moyens de manipulation (7) ;
- positionner, par l'intermédiaire de deuxièmes moyens de manipulation (9), une deuxième palette (8) à charger, depuis un magasin (10) ou depuis une zone d'attente (11) jusqu'à la zone de chargement (6), une fois que la phase d'évacuation de la première palette (5) achevée est terminée, où il y a, entre la phase d'évacuation et la phase de positionnement de la deuxième palette (8) dans la zone de chargement (6), une phase de début de chargement d'un nombre prédéfini d'unités (1) sur la deuxième palette (8) ; ledit procédé étant **caractérisé en ce que** la phase de début de chargement des unités (1) sur la deuxième palette (8) est contrôlée par une unité à microprocesseur (12), qui agit sur les moyens (4) de prélèvement et de transfert et est destinée à définir le nombre d'unités (1) à positionner sur la deuxième palette (8) en fonction des temps d'attente relatifs à l'évacuation de la première palette (5) achevée.

2. Le procédé selon la revendication 1, **caractérisé en ce que** la phase de début de chargement des unités (1) est effectuée dans le magasin (10) ou dans la zone d'attente (11) avec la deuxième palette (8) à l'arrêt.

3. Le procédé selon la revendication 1, **caractérisé en ce que** la phase de début de chargement des unités (1) commence dans le magasin (10) ou dans la zone d'attente (11) avec la deuxième palette (8) à l'arrêt et se poursuit avec la deuxième palette (8) en déplacement vers la zone de chargement (6).

4. Le procédé selon la revendication 1, où la deuxième palette (8) s'arrête dans une zone d'attente (11) intermédiaire entre le magasin (10) et la zone de chargement (6), **caractérisé en ce que** la phase de début de chargement des unités (1) est effectuée sur la deuxième palette (8) alors que celle-ci est à l'arrêt dans la zone d'attente (11).

5. Le procédé selon la revendication 1, **caractérisé en ce que** la phase de prélèvement et de transfert a lieu en tournant chaque unité (1), par l'intermédiaire des moyens (4), d' un angle (α) ayant comme point initial la station de réception (3) et comme point final la zone de chargement (6).

6. Le procédé selon les revendications 1 et 5, **caractérisé en ce que** la phase de début de chargement de la deuxième palette (8) a lieu en tournant chaque unité (1), par l'intermédiaire des moyens (4), d'un deuxième angle (β) autre que le premier angle (α), ayant comme point initial la station de réception (3) et comme point final la zone d'attente (11) ou le magasin (10).

7. Le procédé selon la revendication 6, **caractérisé en ce que** le deuxième angle (β) parcouru par les moyens (4) est supérieur au premier angle (α).
